# EUROPEAN PATENT SPECIFICATION

(11) **EP 4 279 759 B1**
(45) Date of publication and mention of the grant of the patent: **03.09.2025**
(21) Application number: 23168823.5
(22) Date of filing: 19.04.2023
(51) Int. Cl.: F16D 13/64, F16F 15/121, F16F 15/131, F16H 57/12

(54) **VIBRATION DAMPING DEVICE**
SCHWINGUNGSDÄMPFENDE VORRICHTUNG
DISPOSITIF D AMORTISSEMENT VIBRATOIRE

(30) Priority: 28.04.2022 FR 2204036
(43) Date of publication of application: 22.11.2023
(73) Proprietor: VALEO EMBRAYAGES, 80009 Amiens (FR)
(72) Inventor: BOUDIN, Jerome, 80000 Amiens (FR); DAEL, Dominique, 80000 Amiens (FR)
(74) Representative: Valeo Powertrain Systems

(56) References cited:
- FR-A1- 3 039 239
- JP-A- S59 159 431
- US-A- 3 414 101
- US-A- 3 556 273
- US-A- 6 029 793

## Description

The present invention relates to a vibration damping device for a transmission of a motorized machine. The motorized machine may be a motor vehicle, a motorcycle or any other vehicle comprising at least one internal combustion engine. The motor vehicle can be a so-called commercial vehicle, the latter being for example a heavy-duty vehicle, a public transport vehicle, or an agricultural vehicle.

More specifically, the invention relates to an improvement to the vibration damping device in which an axial misalignment compensation device is positioned between the flywheel of the internal combustion engine and the driven shaft of the gearbox.

In the context of a hybrid motor vehicle, the transmission generally comprises an internal combustion engine, a gearbox, a coupling mechanism connecting the internal combustion engine to the gearbox, and an electric motor coupled to the transmission. The vehicle can thus operate at times with the internal combustion engine and at other times with the electric motor, or sometimes simultaneously with both the electric motor and the internal combustion engine.

A vibration damping device is sometimes necessary to filter the irregularities originating from the internal combustion engine upstream of the gearbox. This vibration damping device is generally installed directly on the flywheel of the internal combustion engine and is connected to an input shaft of the gearbox. This type of installation generally poses a problem of kinematic connection between the device output and the gearbox shaft. Due to the significant number of components used within the transmission, the geometric positioning tolerance of the input and output shafts is large, and even amplified by the use of a rotating electric machine. There are therefore static defects in coaxiality between the motor shaft and the transmission input shaft, these defects being axial and angular. A particular function of the vibration damping device is to compensate for the differences in position between the output shaft connected to the internal combustion engine and the input shaft connected to the gearbox.

Likewise, when the internal combustion engine is in use, the rotation of the crankshaft transmits dynamic axial and/or nutational movements to the vibration damping device by means of the flywheel. The axial displacement measured on the outer periphery of the flywheel can reach peak-to-peak values of the order of several millimetres. Another purpose of the vibration damping device is to compensate for the dynamic axial and/or nutational movements in order to avoid damaging the gearbox.

A damping vibration device is known from the document FR3039239A1. Further examples can be found in US3414101 and US6029793.

The invention aims to overcome these technical problems by proposing an improved vibration damping device capable of compensating for the axial and angular tolerances and damping the axial and/or nutational movements of the flywheel significantly better than in the prior art.

Another aim of the invention is to provide a simple, effective and economical solution to these problems.

A further aim of the invention is to supply a vibration damping device capable of reliably transmitting the torque originating from the flywheel to the gearbox input shaft.

To this end, the present invention proposes a vibration damping device for a transmission of a motorized machine, comprising:
- a torque transmission flange;
- two guide elements rotationally connected via an intermediate hub coaxially along an axis of rotation X and positioned on either side of said torque transmission flange;
- helical compression springs directly or indirectly bearing on the torque transmission flange and the guide elements;
- a connection disc arranged so as to be fastened to a flywheel and fixedly connected on its inner periphery to the torque transmission flange or to one of the guide elements;
and a device for compensating for axial misalignments between the flywheel and a transmission input shaft, comprising at least one torque output hub which is equipped with an external fluting and radially arranged inside an internal fluting of the intermediate hub, both internal and external fluting splines comprising involute flanks.

Advantageously, the internal and external flutings of the axial misalignment compensation device may be encased one inside the other with a functional play which is substantially uniformly distributed between the inner periphery of the fluting of the intermediate hub and the outer periphery of the fluting of the torque output hub. The functional play, measurable in millimetres, can be measured when the axis of the internal fluting of the intermediate hub and the axis of the external fluting of the torque output hub are coaxial.

Preferably, the functional play may be greater than a threshold value of 0.5 mm.

The vibration damping device according to the invention has the advantage of compensating for the axial and angular tolerances and also compensating for the nutational movements of the flywheel due to the splined connection between the intermediate hub and the torque output hub. Thanks to the particular geometry of the internal and external flutings, a freedom of movement capacity is available within the vibration damping device, which limits the mechanical stresses within the connection disc.

The torque is also effectively transmitted via splines with involute flanks. In fact, during nutation of the torque output hub relative to the intermediate hub under the effect of rotation of the flywheel, the inner and outer profiles of the splines with involute flanks are coordinated so as to allow the teeth to roll and slide relative to one another. During nutation, the teeth engage and disengage progressively and noiselessly. The torque output hub makes contact with the intermediate hub over several teeth simultaneously thanks to the involute profile, which improves the mechanical fatigue strength of the splines.

Advantageously, the functional play may be equal to the value of the axial eccentricity between the axis of the flywheel and the axis of the transmission input shaft multiplied by a coefficient K, with K between 1.2 and 1.8. The dimension of the functional play is thus a function of the possible axial and angular eccentricity between the axis of the flywheel and the axis of the input shaft of the transmission, e.g. a gearbox, the overlap length of the internal and external flutings, and the production tolerances of the internal and external flutings. Coefficient K also takes into account the dynamic movements of the flywheel.

Preferably, the internal and external flutings may have a profile allowing mutual contact of several involute flanks at maximal axial eccentricity of the torque output hub relative to the intermediate hub, with minimal spline base play in the direction of eccentricity, such that the minimal play is strictly greater than 0. In this case, the minimal play in the direction of maximal axial eccentricity is between the tooth tip of the external fluting and the spline base of the internal fluting. This has the advantage of not wearing the end of the tooth situated in the direction of the maximal eccentricity.

Advantageously, the internal and external splines of the axial misalignment compensation device may be protected by an anti-wear surface coating, for example a surface treatment or heat treatment.

Preferably, the axial misalignment compensation device may comprise an elastic element for axially preloading the torque output hub along axis X against one of the guide elements.

Advantageously, the axial misalignment compensation device may comprise a friction interface zone provided between a side flank of the torque output hub and a flat face of one of the guide elements.

Preferably, the elastic element may be axially inserted between one of the guide elements and an axial retaining ring, the axial retaining ring being inserted in an annular groove formed on the torque output hub.

Advantageously, two flat load application washers may be arranged on either side of the elastic element and interposed between one of the guide elements and the axial retaining ring. This limits the wear of the elastic element.

Preferably, the elastic element may be a conical washer or a corrugated washer.

As a variant, the elastic element may be axially inserted between the one of the guide elements and an axial rim of the torque output hub.

This axial misalignment compensation device according to the invention has the advantage of constantly pressing the torque output hub against one of the guide elements, and consequently reducing the noise within the vibration-damping device.

Advantageously, the connection disc may be attached to the torque transmission plate or one of the guide elements via fastening zones which are angularly distributed around the axis X and arranged so as to be fastened to a flywheel via anchoring zones angularly distributed around the axis X, each anchoring zone being attached to at least two fastening zones by separate connecting arms.

Preferably, the connection disc may comprise apertures formed by the interleaving of the connecting arms. The connection disc is thus perforated so as to make it flexible without affecting its mechanical strength when subjected to torque.

Advantageously, the connecting arms originating from the same anchoring zone can extend in separate angular directions so that they reach their corresponding fastening zones. The connecting arms are separate from each other and transmit the torque to the torque transmission flange or to one of the guide elements independently.

Preferably, the anchoring zones of the connection disc associated with the flywheel may be positioned on an installation diameter D larger than the installation diameter d of the fastening zones associated with the torque transmission flange or with one of the guide elements.

According to one variant, the connection disc may be fastened to the torque transmission flange by means of a riveted connection comprising a series of rivets positioned in fastening orifices in the disc and in corresponding holes in the torque transmission flange.

Preferably, the connection disc may comprise, in a plane perpendicular to the axis X, two axes of minimal bending stiffness, the axes of minimal bending stiffness being perpendicular to each other and one of the two axes passing through two fastening zones angularly opposite each other relative to the axis of rotation X.

Advantageously, the connection disc may comprise, in a plane perpendicular to the axis of rotation X, two axes of symmetry perpendicular to each other. The two axes of symmetry may correspond to the axes of minimal bending stiffness.

Advantageously, the torque transmission plate can comprise openings for receiving helical compression springs, the fastening zones of the disc being angularly distributed between each receiving opening. The distribution of the mechanical stresses within the connection disc is thus substantially uniform over the perimeter of the torque transmission flange.

Preferably, the guide elements may be rotationally connected to the intermediate hub by means of rivets, or a weld.

For example, the guide elements can be guide washers formed from a stamped metal sheet.

According to one embodiment of the invention, the helical compression springs can bear indirectly on openings in the torque transmission flange and on openings in the guide washers by means of interfacing means positioned on the two coaxial parts, the interfacing means comprising for example spring seats placed at the ends of the helical compression springs.

The invention also relates, according to another of its aspects, to a transmission sub-assembly for a transmission of a motorized machine, comprising:
- a flywheel,
- a vibration damping device including all or some of the features mentioned above, fastened to the flywheel, and
- fastening screws inserted into the anchoring zones of the vibration damping device and screwed to the flywheel.

The transmission sub-assembly according to this other aspect of the invention has the advantage that it can be pre-assembled in a factory before delivery to the customer.

The invention will be better understood on reading the following description, which is given solely by way of example and with reference to the appended drawings, in which:
- [Fig. 1] is an axial cross-sectional view of a transmission of a motorized machine incorporating a vibration damping device according to a first embodiment of the invention;
- [Fig. 2] is an exploded isometric view of the vibration damping device according to the first embodiment of the invention in Figure 1;
- [Fig. 3] is a front view of an axial misalignment compensation device according to the first embodiment of the invention in Figure 1 when the two hubs are centred;
- [Fig. 4] is a front view of an axial misalignment compensation device according to the first embodiment of the invention in Figure 1 when the two hubs are eccentric;
- [Fig. 5] is an isometric view of a vibration damping device according to a second embodiment of the invention;
- [Fig. 6] is a front view of a connection disc according to the second embodiment of the invention.

Hereinafter in the description and the claims, by way of non-limiting example and in order to facilitate understanding, the terms "front" and "rear" will be used according to the direction relative to an axial orientation determined by the main axis X of rotation of the transmission of the motor vehicle, and the terms "inner/internal" and "outer/external" will be used relative to the axis X and according to a radial orientation that is orthogonal to said axial orientation.

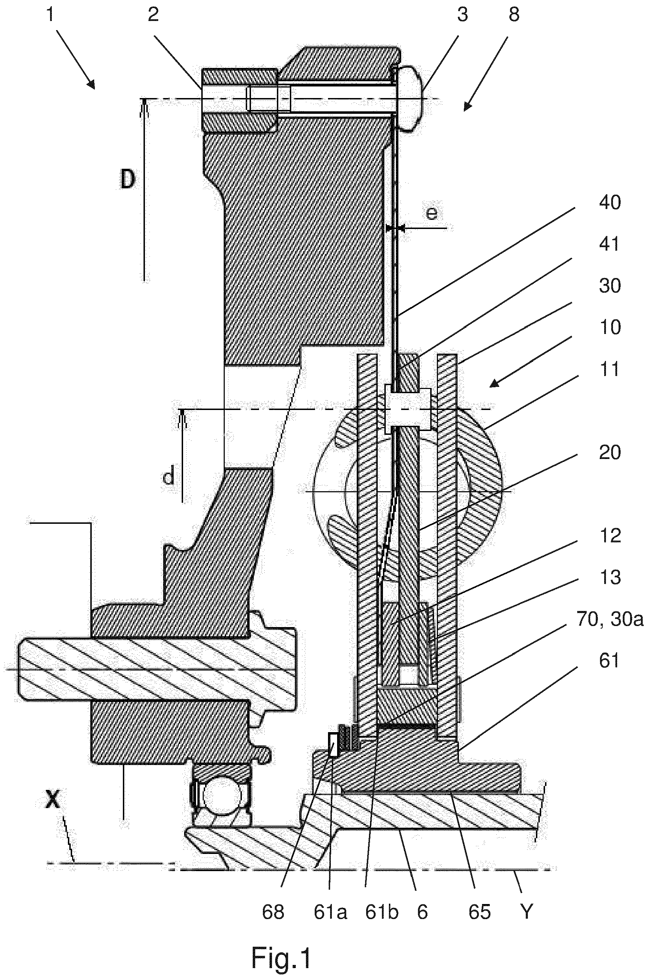

Figures 1 to 4 illustrate a transmission 1 of a motorized machine of the industrial vehicle type incorporating the vibration damping device 10 according to a first embodiment of the invention.

The industrial vehicle comprises in particular an internal combustion engine, a gearbox incorporating a rotating electric machine (not shown) and a transmission sub-assembly 8 interposed between the internal combustion engine and the gearbox. The transmission sub-assembly 8 comprises:
- a flywheel 2 of rotational axis X,
- the vibration damping device 10 fastened to the flywheel 2, and fastening screws 3 inserted into the vibration damping device 10 and screwed to the flywheel.

The transmission sub-assembly 8 has the advantage that it can be pre-assembled in a factory in kit form before delivery to the customer.

The vibration damping device 10 comprises a torque transmission flange 20 having an annular shape about an axis of rotation X, rotationally connected to the flywheel, guide elements 30 and helical compression springs 11. The two guide elements 30, also known as guide washers 30, are positioned on either side of the torque transmission flange 20, trapping the helical compression springs 11 in interposed housings. The guide washers 30 are fastened together to an intermediate hub 62 via rivets 18. This architecture of the vibration damping device 10 is said to be "symmetrical" as the engine torque first enters the vibration damping device through the torque transmission flange 20.

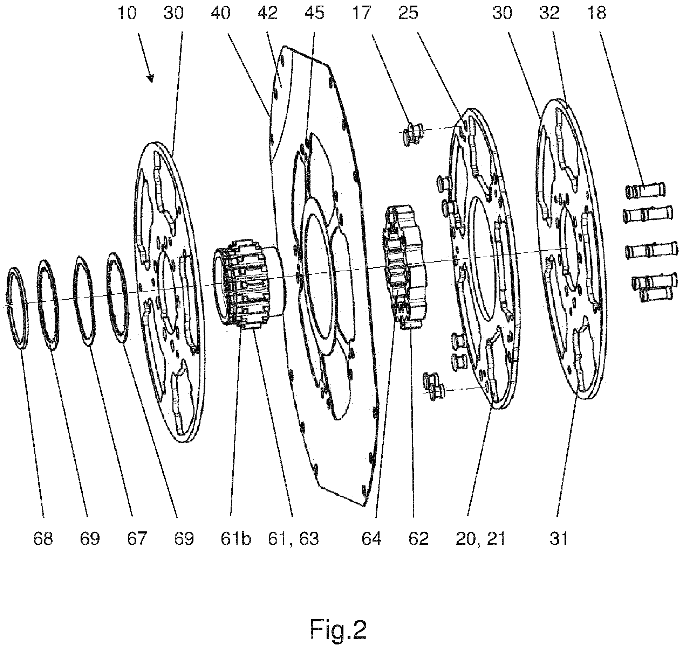

As illustrated in Figures 1 and 2, the coaxial parts 20 and 30 are rotationally mounted relative to each other against damping means including, here, helical compression springs 11. The helical compression springs 11 bear directly on the openings 21 in the torque transmission flange 20 and on the openings 31 in the guide washers 30.

The ends of the helical compression springs 11 are suitable for bearing on the lateral edges of the openings 21, 31 in the annular flange 20 and the guide washers 30. The helical compression springs 11 are distributed circumferentially about the axis X.

When the engine torque passes through the vibration damping device 10, the angular displacement between the guide elements 30 and the torque transmission flange 20 varies and results in the compression of the helical compression springs 11. The torque transmission flange 20 pivots around the intermediate hub 62.

Each guide washer 30 is formed from a stamped metal sheet having a generally constant thickness and includes openings 31 for receiving springs 11 and an outer annular portion 32 suitable for guiding the springs 11 on the angular displacement of the annular flange 20 relative to the guide washers 30.

Friction means 12, 13 are further positioned between each of the guide washers 30 and the torque transmission flange 20.

The helical compression springs 11 and the friction means 12, 13 make it possible, as known *per se,* to absorb and damp the vibrations and rotational irregularities originating from the internal combustion engine.

In one variant (not illustrated), the helical compression springs 11 can bear indirectly on the openings 21 in the torque transmission flange 20 and on the openings 31 in the guide washers 30 by means of interfacing means positioned on the two coaxial parts 20 and 30. More specifically, the interfacing means comprise spring seats placed at the ends of the springs 11 and recesses formed in the guide elements 30 and in the torque transmission flange 20. The spring seats are suitable for interacting with the recesses formed in the guide elements 30 and/or the torque transmission flange 20 about a pivot connection.

According to the invention, the vibration damping device 10 comprises a connection disc 40 attached to the torque transmission flange 20 and fastened to the flywheel 2. Fastening screws 3 screwed to the flywheel 2 apply a clamping force to the connection disc 40 so as to transmit the torque produced by the engine towards the gearbox.

As illustrated in Figure 2, the connection disc 40 comprises an even number of anchoring zones 42 uniformly angularly distributed about the axis X; more specifically, four anchoring zones 42 uniformly angularly distributed about the axis X at an angle of 90 degrees.

As illustrated in Figure 1, the connection disc 40 is fastened to the torque transmission flange 20 by means of a riveted connection comprising a series of rivets 17 positioned in the fastening orifices 45 in the disc and in the corresponding holes 25 in the torque transmission plate.

The engine torque enters the vibration damping device 10 via the connection disc 40 and leaves via a torque output hub 15 arranged centrally to the vibration damping device 10. The torque output hub 61 is mounted on the driven shaft 6 of the gearbox (not shown) with rotational axis Y, and transmits the engine torque via teeth 65 formed on the inner bore thereof.

On each rotation of the engine, the crankshaft transmits axial and/or bending vibrations to the vibration damping device 10 by means of the flywheel 2. The displacement measured on the outer periphery of the flywheel can then reach peak-to-peak values of the order of several millimetres.

As shown on Figure 1, following the assembly of the transmission of the motorized machine, axial and angular offsets can exist between the internal combustion engine output shaft with rotational axis X and the gearbox input shaft with rotational axis Y. The axial and angular offsets measured between the axes X and Y can in this case reach values of the order of one millimetre and/or one degree.

The main aim of the invention is therefore to provide an improved vibration damping device capable of compensating for the axial and angular tolerances and damping the axial displacement of the flywheel. The addition of an axial misalignment compensation device 60 between the flywheel and the transmission input shaft of the motorized machine with the vibration damping device 10 allows the torque output hub 61 to more easily follow the position of the driven shaft 6 of the gearbox.

The arrangement of the axial misalignment compensation device 60 according to the first embodiment of the invention will now be described in more detail with reference to Figures 1 to 4.

The axial misalignment compensation device 60 acting between the flywheel and the transmission input shaft comprises in particular the torque output hub 61 which is equipped with an external fluting 63 and radially arranged inside an internal fluting 64 of the intermediate hub 62, both internal and external fluting splines 63, 64 comprising involute flanks. The involute flank geometry ensures a greater mechanical fatigue strength and limits the wear between the internal and external splines. The internal and external splines 63, 64 are rectilinear.

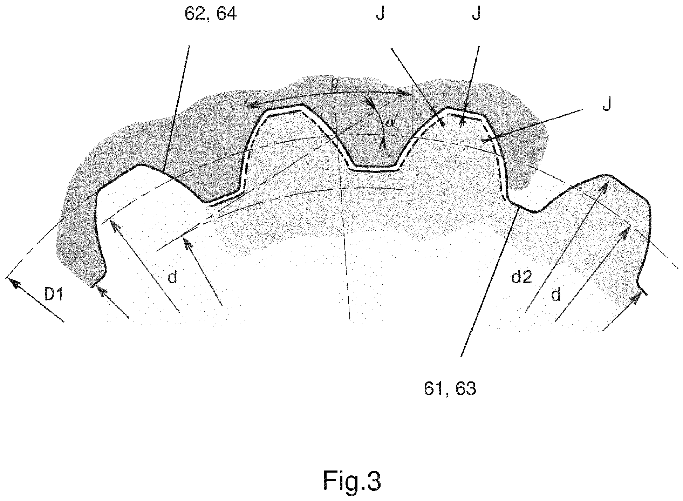

In order to ensure an axial misalignment compensation capacity between the flywheel and the transmission input shaft, the internal and external flutings 63, 64 of the axial misalignment compensation device are encased one inside the other with a functional play J which is substantially uniformly distributed between the inner periphery of the fluting of the intermediate hub and the outer periphery of the fluting of the torque output hub (see figure 3). The functional play is greater than a threshold value of 0.5 mm. The tolerance in the uniform distribution of the functional play is of the order of +/- 0.1 mm. The functional play applies to the external and internal diameters of the flutings.

More precisely, the functional play J is equal to the value of the maximal axial eccentricity E between the axis of the flywheel and the axis of the transmission input shaft multiplied by a coefficient K, with K between 1.2 and 1.8. This dimensioning of the functional play is thus a function of the possible axial and angular eccentricity E between the axis of the flywheel and the axis of the input shaft of the transmission, e.g. a gearbox, the overlap length of the internal and external flutings which is generally between 15 and 40 mm, and the production tolerances of the internal and external flutings.

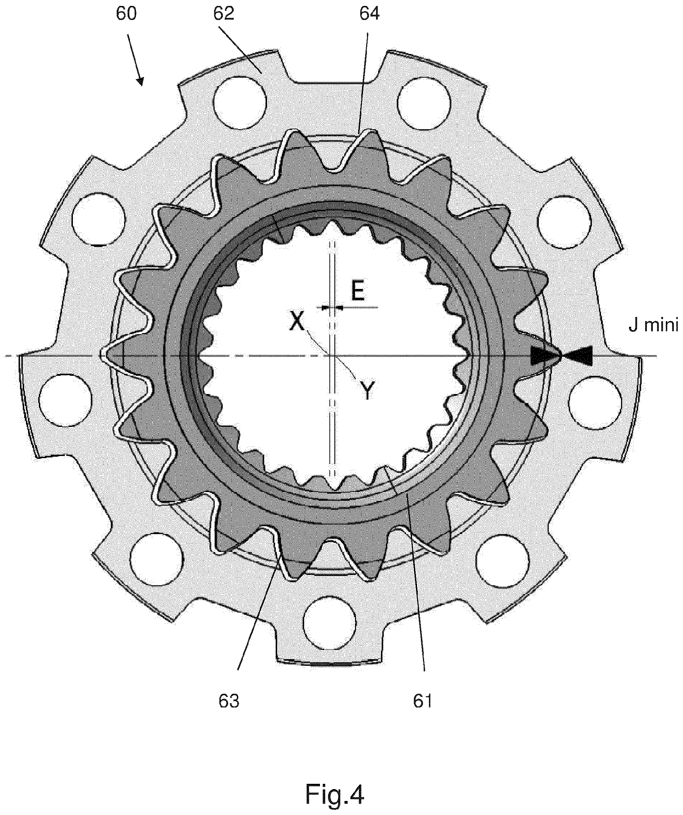

On a design basis complying with standard NF E22-141, the internal and external flutings 63, 64 are determined from, inter alia, the following influential parameters: the number of teeth, the modulus corresponding to the pitch p divided by π, the nominal diameter D1, the pitch circle diameter d, the external diameter d2 and the pressure angle α. These parameters are also visible in figure 3. Relative to standard dimensions, the internal fluting 64 or external fluting 63 according to the invention is locally thinned. In particular, the internal and external flutings 63, 64 have a profile allowing mutual contact of several involute flanks at maximal axial eccentricity E of the torque output hub 61 relative to the intermediate hub 62, with minimal spline base play Jmini in the direction of eccentricity, such that the minimal play Jmini is strictly greater than 0. As illustrated in Figure 4, the minimal play Jmini in the direction of maximal axial eccentricity E is between the tooth tip of the external fluting 63 and the spline base of the internal fluting 64.

Depending on application, the internal and external splines 63, 64 of the axial misalignment compensation device may be protected by an anti-wear surface coating, for example a surface treatment of the nickel-plating type, or a heat treatment of the high-frequency surface hardening type.

In order to damp the dynamic movements coming from the flywheel wheel 2, the axial misalignment compensation device 60 comprises an elastic element 67 for axially preloading the torque output hub 61 along the axis X against one of the guide elements 30.

As illustrated in Figures 1 and 2, the elastic element 67 is axially inserted between one of the guide elements 30 and an axial retaining ring 68, the axial retaining ring 68 being inserted in an annular groove 61a formed on the torque output hub 61. Preferably, the elastic element 67 is a conical washer. As a variant, the elastic element 67 may be a corrugated washer

To limit the wear on the elastic element, two flat load application washers 69 may be arranged on either side of the elastic element 67 and interposed between one of the guide elements 30 and the axial retaining ring 68. The axial misalignment compensation device 60 comprises a friction interface zone 70 provided between a side flank 61b of the torque output hub 61 and a flat face 30b of one of the guide elements. Thus the torque output hub 61 is constantly pressed against one of the guide elements 30 and hence reduces the noise within the vibration damping device.

As a variant, the elastic element 67 may be axially inserted between one of the guide elements 30 and an axial rim of the torque output hub 61.

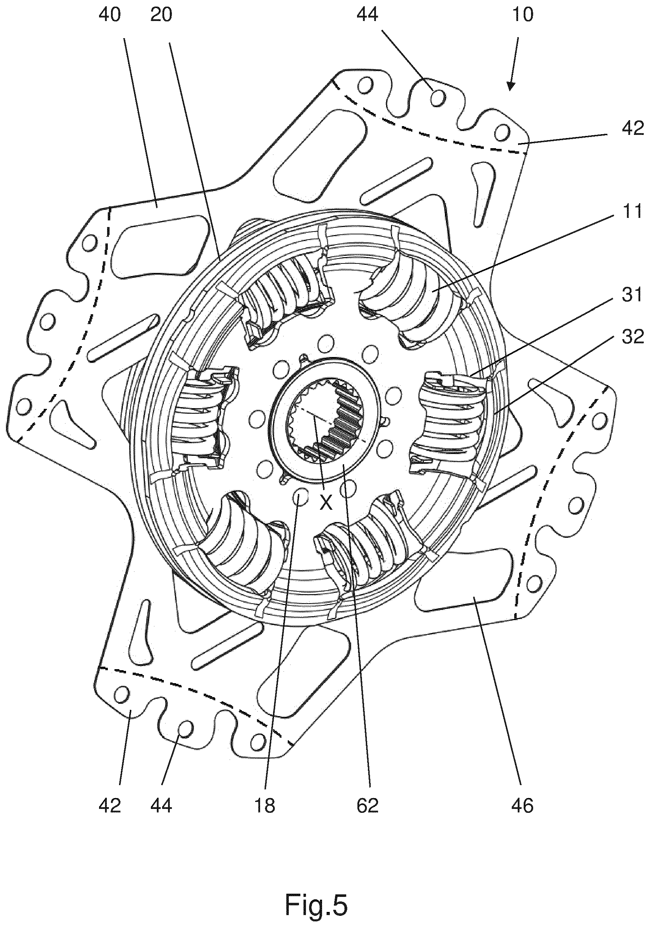

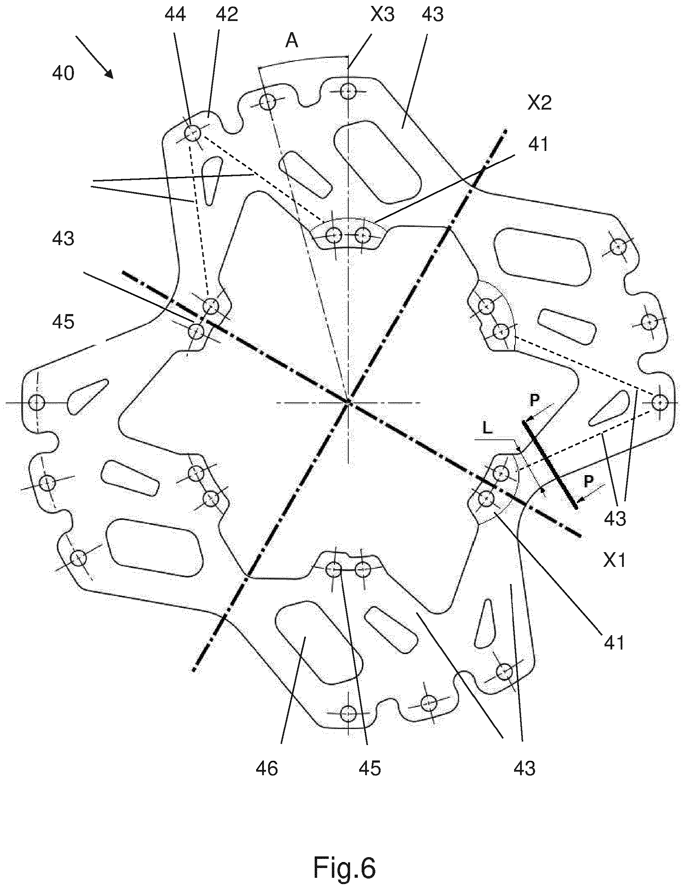

With reference to Figures 5 and 6, a vibration damping device 10 according to a second embodiment of the invention will now be described, wherein the connection disc 40 is attached to the torque transmission plate via fastening zones which are angularly distributed around the axis X and arranged so as to be fastened to the flywheel via anchoring zones angularly distributed around the axis X, each anchoring zone being attached to at least two fastening zones by separate connecting arms.

As illustrated in Figure 5, the connection disc 40 comprises an even number of anchoring zones 42 uniformly distributed angularly about the axis X; more specifically, four anchoring zones 42 uniformly distributed angularly about the axis X at an angle of 90 degrees. The four anchoring zones 42 are identified by way of illustration by the dashed lines corresponding substantially to the bearing zone on the flywheel 2.

In this example, each anchoring zone 42 of the connection disc 40 comprises several anchoring orifices 44 angularly offset to one another around the axis X. Each anchoring zone comprises three anchoring orifices 44 angularly offset by an angle of 15 degrees relative to the axis X.

According to further possible examples, the anchoring orifices in the same anchoring zone can be angularly offset from each other by an angle of between 10 and 45 degrees about the axis X.

As illustrated in Figure 6, the connection disc 40 comprises an even number of fastening zones 41 uniformly angularly distributed about the axis X; more specifically, six fastening zones 41 uniformly angularly distributed about the axis X at an angle of 60 degrees.

The six fastening zones 41 bear on the torque transmission flange 20 and each of the fastening zones 41 of the connection disc 40 comprises two fastening orifices 45.

In this example, the number of anchoring zones 42 is smaller than the number of fastening zones 41.

The torque transmission flange 20 comprises openings 21 for receiving helical compression springs 11, the fastening zones 41 of the disc being angularly distributed between each receiving opening 21. The distribution of the mechanical stresses within the disc is thus substantially uniform over the perimeter of the torque transmission plate.

In order to make the connection disc 40 axially flexible, each anchoring zone 42 is connected to at least two fastening zones by separate connecting arms 43. The connecting arms 43 are separate from each other and transmit the torque to the torque transmission flange 20 independently.

The connecting arms 43 originating from different anchoring orifices 44 can intersect and be interleaved. The connection disc 40 comprises in particular apertures 46 formed by the interleaving of the connecting arms, which make the vibration damping device flexible. The anchoring zones 42 of the connection disc 40 associated with the flywheel 2 are positioned on an installation diameter D larger than the installation diameter d of the fastening zones 41 associated with the torque transmission plate 20.

In this example, one of the anchoring zones 42 of the connection disc 40 associated with the flywheel 2 is offset by an angle A of 15 degrees relative to an axis X3 passing through two fastening zones 41 which are angularly opposite each other relative to the axis of rotation X. The effect of this offset of 15 degrees of this axis X3 is to increase the number of connecting arms 43 and increase the torque transmission capacity of the connection disc 40. This effect also occurs when the angle A is between 5 and 25 degrees.

The connection disc 40 also comprises, in a plane P' perpendicular to the axis X, two axes X1, X2 of minimal bending stiffness, the axes X1, X2 of minimal bending stiffness being perpendicular to each other and one of the two axes X1 passing through two fastening zones 41 angularly opposite each other relative to the axis of rotation X. The axis X1 is not congruent with the axis X3. The axes X1, X2 of minimal bending stiffness correspond to preferred axes about which the disc 40 can deform in bending more easily. The stiffness can be measured by applying a load in Newtons in a direction perpendicular to the plane P' on the periphery of the disc, for example in the anchoring zones 42. The stiffness is measured on the connection disc 40 only, i.e. when it is not assembled on the vibration damping device.

Advantageously, the connection disc 40 comprises, in a plane perpendicular to the axis of rotation X, two axes X1, X2 of symmetry perpendicular to each other. The two axes X1, X2 of symmetry perpendicular to each other correspond to the axes of minimal bending stiffness.

The connection disc 40 has a homogenous geometry of form, regularly distributed around the axis X. The distribution of mechanical stresses within the connection disc 40 is substantially uniform over the periphery of the torque transmission flange 20.

Each connecting arm 43 comprises, in a plane P parallel to the axis X, a section of material having a thickness E and a width L such that the ratio L / E is greater than 10.

The connection disc 40 is preferably made from a steel sheet, the thickness of which may be variable. According to one variant, the connecting arm 43 can comprise a variable thickness E over all or part of the extent of the connecting arm and/or a variable width L over all or part of the extent of the connecting arm.

The invention is not limited to use in an industrial vehicle transmission as described above. The vibration damping device 10 can also be incorporated into a transmission of a "conventional" motorized machine that does not comprise a rotating electric motor.

## Claims

1. Vibration damping device (10) for a transmission of a motorized machine, comprising:
- a torque transmission flange (20);
- two guide elements (30) rotationally connected via an intermediate hub (62) coaxially along an axis of rotation (X) and positioned on either side of said torque transmission flange (20);
- helical compression springs (11) directly or indirectly bearing on the torque transmission flange and the guide elements;
- a connection disc (40) arranged so as to be fastened to a flywheel and fixedly connected on its internal periphery to the torque transmission flange (20) or to one of the guide elements (30);
and, **characterized in that** the vibration damping device comprises a device for compensating for axial misalignments (60) between the flywheel and a transmission input shaft, comprising at least one torque output hub (61) which is equipped with an external fluting (63) and radially arranged inside an internal fluting (64) of the intermediate hub (62), both internal and external fluting splines (63, 64) comprising involute flanks.

2. Vibration damping device (10) according to Claim 1, **characterized in that** the internal and external flutings (63, 64) of the axial misalignment compensation device (60) are encased one inside the other with a functional play (J) which is substantially uniformly distributed between the inner periphery of the fluting (64) of the intermediate hub and the outer periphery of the fluting (63) of the torque output hub.

3. Vibration damping device (10) according to Claim 1 or 2, **characterized in that** the internal and external flutings (63, 64) have a profile allowing mutual contact of several involute flanks at maximal axial eccentricity (E) of the torque output hub (61) relative to the intermediate hub (62), with minimal spline base play (Jmini) in the direction of the eccentricity, such that the minimal play (Jmini) is strictly greater than 0.

4. Vibration damping device (10) according to any of Claims 1 to 3, **characterized in that** the axial misalignment compensation device (60) comprises an elastic element (67) for axially preloading the torque output hub (61) along the axis (X) against one of the guide elements (30).

5. Vibration damping device (10) according to the preceding claim,
**characterized in that** the axial misalignment compensation device (60) comprises a friction interface zone (70) provided between a side flank (61b) of the torque output hub (61) and a flat face (30a) of one of the guide elements.

6. Vibration damping device (10) according to one of Claims 4 or 5,
**characterized in that** the elastic element (67) is axially inserted between the one of the guide elements (30) and an axial retaining ring (68), the axial retaining ring (68) being inserted in an annular groove (61a) formed on the torque output hub.

7. Vibration damping device (10) according to the preceding claim, **characterized in that** two flat load application washers (69) are arranged on either side of the elastic element (67) and interposed between one of the guide elements and the axial retaining ring (68).

8. Vibration damping device (10) according to any of the preceding claims, **characterized in that** the connection disc (40) is attached to the torque transmission flange or one of the guide elements via fastening zones (41) which are angularly distributed around the axis (X) and arranged so as to be fastened to a flywheel via anchoring zones (42) angularly distributed around the axis (X), each anchoring zone (42) being attached to at least two fastening zones (41) by separate connecting arms (43).

9. Vibration damping device (10) according to the preceding claim,
**characterized in that** the connecting arms (43) originating from the same anchoring zone (42) extend in separate angular directions so that they reach their corresponding fastening zones (41).

10. Vibration damping device (10) according to one of Claims 8 or 9, **characterized in that** the connection disc (40) comprises apertures (46) formed by the interleaving of the connecting arms (43).

11. Vibration damping device (10) according to one of Claims 8 to 10, **characterized in that** the connection disc (40) comprises, in a plane (P') perpendicular to the axis (X), two axes (X1, X2) of minimal bending stiffness, the axes (X1, X2) of minimal bending stiffness being perpendicular to each other and one of the two axes (X1, X2) passing through two fastening zones (41) angularly opposite each other relative to the axis of rotation (X).

12. Vibration damping device (10) according to the preceding claim, **characterized in that** the connection disc (40) comprises, in a plane perpendicular to the axis of rotation (X), two axes (X1, X2) of symmetry perpendicular to each other, corresponding to the axes of minimal bending stiffness.

13. Transmission sub-assembly (8) for a transmission (1) of a motorized machine, comprising:
- a flywheel (2),
- a vibration damping device (10) according to any one of the preceding claims, fastened to the flywheel (2), and
- fastening screws (3) inserted into the anchoring zones (42) of the vibration damping device and screwed to the flywheel.

## Patentansprüche

1. Schwingungsdämpfungsvorrichtung (10) für ein Kraftfahrzeuggetriebe, umfassend:
- eine Drehmomentübertragungsscheibe (20);
- zwei Führungselemente (30), die durch eine Zwischennabe (62) koaxial entlang einer Drehachse (X) drehfest verbunden und beiderseits der Drehmomentübertragungsscheibe (20) angeordnet sind;
- Schraubendruckfedern (11), die direkt oder indirekt auf der Drehmomentübertragungsscheibe und den Führungselementen aufliegen;
- eine Verbindungsscheibe (40), die zur Befestigung an einem Schwungrad vorgesehen ist und an ihrem inneren Umfang fest mit der Drehmomentübertragungsscheibe (20) oder einem der Führungselemente (30) verbunden ist;
und, **dadurch gekennzeichnet, dass** die Schwingungsdämpfungsvorrichtung eine Vorrichtung zum Ausgleich von axialen Versätzen (60) zwischen dem Schwungrad und einer Getriebeeingangswelle umfasst, die mindestens eine Drehmomentausgangsnabe (61) umfasst, die mit einer Außenverzahnung (63) versehen und radial innerhalb einer Innenverzahnung (64) der Zwischennaht (62) angeordnet ist, wobei die beiden inneren und äußeren verzahnungen (63, 64) Flanken umfassen, die als Evolvente eines Kreises ausgeführt sind.

2. Schwingungsdämpfungsvorrichtung (10) nach Anspruch 1,
**dadurch gekennzeichnet, dass** die Innen- und Außenverzahnung (63, 64) der Vorrichtung zum Ausgleich axialer Versätze (60) mit einem im Wesentlichen gleichmäßig zwischen dem Innenumfang der Nut (64) der Zwischennabe und dem Außenumfang der Nut (63) der Drehmomentausgangsnabe verteilten Spiel (J) ineinander gesteckt sind.

3. Schwingungsdämpfungsvorrichtung (10) nach Anspruch 1 oder 2, **dadurch gekennzeichnet, dass** die inneren und äußeren Keilnuten (63, 64) ein Profil aufweisen, das bei maximaler axialer Exzentrizität (E) der Drehmomentausgangsnabe (61) gegenüber der Zwischennabe (62) einen mehrflankigen kreisentwickelten Kontakt zwischen ihnen mit minimalem Keilnutgrundspiel (Jmin) in Richtung der Keilnutgrundfläche (61) ermöglicht. (61) gegenüber der Zwischenbuchse (62) bei minimalem Spiel (Jmini) zwischen den Nutböden in Exzentrizitätsrichtung, so dass das minimale Spiel (J ) streng größer als 0 ist.

4. Schwingungsdämpfungsvorrichtung (10) nach einem der Ansprüche 1 bis 3, **dadurch gekennzeichnet, dass** die Vorrichtung zum Ausgleich von axialen Versätzen (60) ein elastisches Element (67) zum axialen Vorspannen entlang der Achse (X) der Drehmomentausgangsnabe (61) gegen eines der Führungselemente (30).

5. Schwingungsdämpfungsvorrichtung (10) nach dem vorherigen Anspruch, **dadurch gekennzeichnet, dass** die Vorrichtung zum Ausgleichen von axialen Versätzen (60) einen Reibungsgrenzbereich (70) umfasst, der zwischen einer Seitenflanke (61b) der Drehmomentausgangsnabe (61) und einer ebenen Fläche (30a) eines der Führungselemente (30) angeordnet ist.

6. Schwingungsdämpfungsvorrichtung (10) nach einem der Ansprüche 4 oder 5, **dadurch gekennzeichnet, dass** das elastische Element (67) axial zwischen einem der Führungselemente (30) und einem axialen Haltering (68) eingesetzt ist, wobei der Axialhalte-Ring (68) in eine an der Drehmomentabtriebsnabe ausgebildete Ringnut (61a) eingesetzt ist.

7. Schwingungsdämpfungsvorrichtung (10) nach dem vorherigen Anspruch, **dadurch gekennzeichnet, dass** zwei flache Lastangriffsscheiben (69) beidseitig des elastischen Elements (67) angeordnet und zwischen einem der Führungselemente und dem axialen Haltering (68) angeordnet sind.

8. Schwingungsdämpfungsvorrichtung (10) nach einem der vorstehenden Ansprüche, **dadurch gekennzeichnet, dass** die Verbindungsscheibe (40) über Befestigungsbereiche (41), die winklig um die Achse (X) verteilt sind, an der Drehmomentübertragungswand oder an einem der Führungselemente angebracht ist und über winklig um die Achse (X) verteilte Verankerungsbereiche (42) an einem Schwungrad befestigt ist, wobei jeder Verankerungsbereich über separate Verbindungsarme (43) mit mindestens zwei Befestigungsbereichen (41) verbunden ist.

9. Schwingungsdämpfungsvorrichtung (10) nach dem vorhergehenden Anspruch, **dadurch gekennzeichnet, dass** die Verbindungsarme (43), die von derselben Verankerungszone (42) ausgehen, sich in unterschiedlichen Winkelrichtungen erstrecken, so dass sie ihre entsprechenden Befestigungszonen (41) erreichen.

10. Schwingungsdämpfungsvorrichtung (10) nach einem der Ansprüche 8 oder 9, **dadurch gekennzeichnet, dass** die Verbindungsscheibe (40) Aussparungen (46) aufweist, die durch die Verflechtung der Verbindungsarme (43) gebildet sind.

11. Schwingungsdämpfungsvorrichtung (10) nach einem der Ansprüche 8 bis 10, **dadurch gekennzeichnet, dass** die Verbindungsscheibe (40) in einer zur Achse (X) senkrechten Ebene (P') zwei Achsen (X1, X2) mit minimaler Biegesteifigkeit aufweist, wobei die Achsen (X1, X2) mit minimaler Biegesteifigkeit senkrecht zueinander stehen und eine der beiden Achsen (X1, X2) durch zwei Befestigungsbereiche (41) verläuft, die in Bezug auf die Drehachse (X) winklig gegenüberliegen.

12. Schwingungsdämpfungsvorrichtung (10) nach dem vorherigen Anspruch, **dadurch gekennzeichnet, dass** die Verbindungsscheibe (40) in einer zur Drehachse (X) senkrechten Ebene zwei zueinander senkrechte Symmetrieachsen (X1, X2) aufweist, die den Achsen minimaler Biegesteifigkeit entsprechen.

13. Getriebe-Baugruppe (8) für ein Getriebe (1) eines Kraftfahrzeugs, umfassend:
- ein Schwungrad (2),
- eine Schwingungsdämpfungsvorrichtung (10) gemäß einem der vorstehenden Ansprüche, die an dem Schwungrad (2) befestigt ist, und
- Befestigungsschrauben (3), die in Verankerungsbereiche (42) der Schwingungsdämpfungsvorrichtung eingesetzt und am Schwungrad verschraubt sind.

## Revendications

1. Dispositif d'amortissement vibratoire (10) pour une transmission d'engin motorisé, comprenant :
- un voile de transmission de couple (20) ;
- deux éléments de guidage (30) liés en rotation par un moyeu intermédiaire (62) de manière coaxiale suivant un axe de rotation (X) et disposés de part et d'autre dudit voile de transmission de couple (20) ;
- des ressorts hélicoïdaux de compression (11) en appui directement ou indirectement sur le voile de transmission de couple et les éléments de guidage ;
- un disque de connexion (40) agencé pour être fixé sur un volant d'inertie, raccordé fixement sur sa périphérie interne au voile de transmission de couple (20) ou à l'un des éléments de guidage (30) ;
et, caractérisé en ce le dispositif d'amortissement vibratoire comprend un dispositif de reprise des désalignements axiaux (60) entre le volant d'inertie et un arbre d'entrée de transmission, comprenant au moins un moyeu de sortie de couple (61) équipé d'une cannelure externe (63) et disposé radialement à l'intérieur d'une cannelure interne (64) du moyeu intermédiaire (62), les deux cannelures interne et externe (63, 64) comprenant des flancs en développante de cercle.

2. Dispositif d'amortissement vibratoire (10) selon la revendication 1, **caractérisé en ce que** les cannelures interne et externe (63, 64) du dispositif de reprise des désalignements axiaux (60) sont emboitées l'une dans l'autre avec un jeu de fonctionnement (J) réparti de manière sensiblement uniforme entre la périphérie interne de la cannelure (64) du moyeu intermédiaire et la périphérie externe de la cannelure (63) du moyeu de sortie de couple.

3. Dispositif d'amortissement vibratoire (10) selon la revendication 1 ou 2, **caractérisé en ce que** les cannelures interne et externe (63, 64) ont un profil autorisant un contact de plusieurs flancs en développante de cercle entre eux lors de l'excentration axiale (E) maximale du moyeu de sortie de couple (61) par rapport au moyeu intermédiaire (62) avec un jeu minimal (Jmini) de fond de cannelures dans la direction de l'excentration tel que le jeu minimal (Jmini) est strictement supérieur à 0.

4. Dispositif d'amortissement vibratoire (10) selon l'une des revendications 1 à 3, **caractérisé en ce que** le dispositif de reprise des désalignements axiaux (60) comprend un organe élastique (67) de mise en précharge axiale selon l'axe (X) du moyeu de sortie de couple (61) contre un des éléments de guidage (30).

5. Dispositif d'amortissement vibratoire (10) selon la revendication précédente, **caractérisé en ce que** le dispositif de reprise des désalignements axiaux (60) comprend une zone d'interface de frottement (70) disposée entre un flanc latéral (61b) du moyeu de sortie de couple (61) et une face plane (30a) de l'un des éléments de guidage (30).

6. Dispositif d'amortissement vibratoire (10) selon l'une des revendications 4 ou 5, **caractérisé en ce que** l'organe élastique (67) est inséré axialement entre l'un des éléments de guidage (30) et un anneau de retenue axiale (68), l'anneau de retenue axiale (68) étant inséré dans une gorge annulaire (61a) formée sur le moyeu de sortie de couple.

7. Dispositif d'amortissement vibratoire (10) selon la revendication précédente, **caractérisé en ce que** deux rondelles plates d'application de charge (69) sont disposées de part et d'autres de l'organe élastique (67) et intercalées entre l'un des éléments de guidage et l'anneau de retenue axiale (68).

8. Dispositif d'amortissement vibratoire (10) selon l'une des revendications précédentes, **caractérisé en ce que** le disque de connexion (40) est rapporté sur le voile de transmission de couple ou sur l'un des éléments de guidage par l'intermédiaire de zones de fixation (41) réparties angulairement autour de l'axe (X) et agencé pour être fixé sur un volant d'inertie par l'intermédiaire de zones d'ancrage (42) réparties angulairement autour de l'axe (X), chaque zone d'ancrage étant raccordée à au moins deux zones de fixation (41) par des bras de liaison (43) distincts.

9. Dispositif d'amortissement vibratoire (10) selon la revendication précédente, **caractérisé en ce que** les bras de liaison (43) issus d'une même zone d'ancrage (42) s'étendent dans des directions angulaires distinctes de manière à rejoindre leurs zones de fixation (41) correspondantes.

10. Dispositif d'amortissement vibratoire (10) selon l'une des revendications 8 ou 9, **caractérisé en ce que** le disque de connexion (40) comprend des crevés (46) formés par l'enchevêtrement des bras de liaison (43).

11. Dispositif d'amortissement vibratoire (10) selon l'une des revendications 8 à 10, **caractérisé en ce que** le disque de connexion (40) comprend, dans un plan (P') perpendiculaire à l'axe (X), deux axes (X1, X2) de raideur minimale en flexion, les axes (X1, X2) de raideur minimale en flexion étant perpendiculaires entre eux et l'un des deux axes (X1, X2) passant par deux zones de fixation (41) opposées angulairement par rapport à l'axe de rotation (X).

12. Dispositif d'amortissement vibratoire (10) selon la revendication précédente, **caractérisé en ce que** le disque de connexion (40) comprend, dans un plan perpendiculaire à l'axe de rotation (X), deux axes (X1, X2) de symétrie perpendiculaires entre eux correspondant aux axes de raideur minimale en flexion.

13. Sous-ensemble (8) de transmission pour une transmission (1) d'engin motorisé, comprenant :
- un volant d'inertie (2),
- un dispositif d'amortissement vibratoire (10) selon l'une quelconque des revendications précédentes, fixé sur le volant d'inertie (2), et
- des vis de fixation (3) insérées dans des zones d'ancrage (42) du dispositif d'amortissement vibratoire et vissées sur le volant d'inertie. 1
